# EUROPÄISCHE PATENTSCHRIFT

(11) **EP 1 957 302 B1**
(45) Veröffentlichungstag und Bekanntmachung des Hinweises auf die Patenterteilung: **11.11.2009**
(21) Anmeldenummer: 06828636.8
(22) Anmeldetag: 07.12.2006
(51) Int. Cl.: B60J 7/12

(54) **VORRICHTUNG UND VERFAHREN ZUR BETÄTIGUNG EINES ÖFFNUNGSFÄHIGEN FAHRZEUGDACHSYSTEMS**
DEVICE AND METHOD FOR ACTUATING AN OPENABLE VEHICLE ROOF SYSTEM
DISPOSITIF ET PROCÉDÉ POUR ACTIONNER UN SYSTÈME DE TOIT OUVRANT POUR VÉHICULE

(30) Priorität: 09.12.2005 DE 102005058921
(43) Veröffentlichungstag der Anmeldung: 20.08.2008
(73) Patentinhaber: Webasto AG, 82131 Stockdorf (DE)
(72) Erfinder: ANTREICH, Michael, 82110 Germering (DE); GROSS, Markus, 82399 Raisting (DE); MORSCHEIT, Christof, 81673 München (DE)
(86) Internationale Anmeldenummer: PCT/DE2006/002187
(87) Internationale Veröffentlichungsnummer: WO 2007/076768

(56) Entgegenhaltungen:
- DE-A1- 10 219 513
- US-A1- 2001 015 127

## Beschreibung

Die vorliegende Erfindung betrifft eine Vorrichtung sowie ein Verfahren zur Betätigung eines Fahrzeugdachsystems nach dem Oberbegriff des Anspruchs 1 bzw. dem Oberbegriff des Anspruchs 8.

Eine derartige Vorrichtung sowie ein derartiges Verfahren sind beispielsweise aus der DE 102 19 513 A1 bekannt. In dieser Veröffentlichung wird ein Verdecksystem für ein Fahrzeug beschrieben, bei welchem wenigstens zwei hydraulisch bewegbare Komponenten vorgesehen sind, beispielsweise ein Verdeck und eine Abdeckkappe eines Verdeckablageraums. Bei der Verstellung des Fahrzeugverdecks kann vorgesehen sein, dass sich während des Bewegungsablaufs zuerst ein erster Aktor in Betrieb befindet, dann der erste und ein zweiter Aktor in Reihe geschaltet werden und somit synchron arbeiten, und schließlich der zweite Aktor seine Bewegung fortsetzt, während der erste Aktor in einer Endlage festgehalten wird.

Wenngleich die in der zweiten Phase vorgesehene "Synchronverstellung" mehrerer Komponenten vorteilhaft einen insgesamt raschen und eleganten Bewegungsablauf bei der Verdeckverstellung ermöglicht, so birgt diese Ausführung die nicht unerhebliche Gefahr einer unerwünschten Kollision von Komponenten des Verdecksystems miteinander oder mit anderen Komponenten der Fahrzeugkarosserie.

Bei dem in der vorstehend erwähnten DE 102 19 513 A1 beschriebenen Verdecksystem ist beispielsweise zu bedenken, dass die als Hydrozylinder ausgebildeten Aktoren und die damit bewegten Gestängemechanismen in der Praxis toleranzbehaftet sind. Zudem können im hydraulischen Gesamtsystem unerwünschte Leckagen auftreten, welche im Betrieb die durch die hydraulische Kopplung der beiden Aktoren theoretisch vorgegebene Synchronisierung beeinträchtigen können.

Es ist daher eine Aufgabe der vorliegenden Erfindung, die Betriebssicherheit bei der Betätigung eines Fahrzeugdachsystems der eingangs genannten Art zu erhöhen, insbesondere die Gefahr von unerwünschten Kollisionen einzelner Fahrzeugdach- oder Fahrzeugrumpfkomponenten zu verringern.

Diese Aufgabe wird gelöst durch eine Betätigungsvorrichtung nach Anspruch 1 bzw. ein Betätigungsverfahren nach Anspruch 8.

Die Grundidee der Erfindung besteht darin, die während der Synchronverstellungsphase erfolgende Bewegung der Komponenten zu überwachen und gegebenenfalls zu korrigieren. Damit können vorteilhaft insbesondere durch Toleranzen oder Betriebsfehler (z. B. Leckagen) bedingte Abweichungen der Synchronbewegung von der theoretisch bereits durch die Art und Weise der hydraulischen Kopplung vorgegebenen Bewegung erfasst und noch während des Verstellvorgangs beseitigt werden.

Die erfindungsgemäße Betätigungsvorrichtung umfasst:
- Überwachungsmittel zum Überwachen der Synchronbewegung der beiden Komponenten während der Synchronverstellungsphase und zum Erfassen einer Abweichung der Synchronbewegung von einer vorgegebenen Soll-Synchronbewegung, und
- Korrekturmittel zum Korrigieren der Synchronbewegung durch wenigstens teilweises Aufheben der hydraulischen Kopplung der beiden Aktoren im Falle der Erfassung einer Abweichung der Synchronbewegung von der vorgegebenen Soll-Synchronbewegung.

In einer bevorzugten Ausführungsform umfassen die Überwachungsmittel eine elektronische Steuereinrichtung, welcher Sensorsignale einer an beiden Aktoren und/oder beiden Komponenten des Fahrzeugdachsystems angeordneten Weg- und/oder Drehwinkelsensorik zur Auswertung eingegeben werden.

Bei der elektronischen Steuereinrichtung kann es sich insbesondere um eine üblicherweise als ECU ("electronic control unit") bezeichnete Einrichtung handeln. Eine derartige elektronische Steuereinrichtung, insbesondere programmgesteuert, eignet sich im Rahmen der Erfindung besonders gut zur Realisierung der erforderlichen Überwachungs- und Korrekturfunktionalität.

Im Hinblick auf eine möglichst genaue Abbildung des tatsächlichen Bewegungsablaufs der Komponenten des Fahrzeugdachsystems durch eine hierfür vorgesehene Sensorik ist ganz allgemein eine Anbringung geeigneter Sensoren im Bereich der Komponenten selbst oder im Bereich zwischen den Komponenten und den betreffenden Aktoren (beispielsweise als Drehwinkelgeber an einem Betätigungsgelenk) bevorzugt. Die Sensorik kann z. B. in einer der folgenden Weisen (oder einer Kombination davon) realisiert sein:
- Mittels Linearwegsensoren an Hydraulikzylindern (Aktoren), welche die aktuelle Kolbenstellung des jeweils zugeordneten Hydraulikzylinders erkennen,
- Mittels einer Einrichtung, über welche die Drehbewegung eines Getriebegestänges zu einem Linearsensor weitergeleitet wird,
- Mittels Drehwinkelsensoren, die günstig bzw. bestmöglich an einem Getriebegestänge positioniert sind, um die jeweiligen Bewegungen optimal zu erfassen.

Die Auswertung von Sensorsignalen, die den Überwachungsmitteln bereitgestellt werden, erfolgt in einer bevorzugten Ausführungsform programmgesteuert.

In einer Ausführungsform ist vorgesehen, dass die Überwachungsmittel einen tatsächlichen Bewegungsparameter der zweiten Komponente mit einem auf Basis eines tatsächlichen Bewegungsparameters der ersten Komponente erzeugten Soll-Bewegungsparameter der zweiten Komponente vergleichen und die Korrekturmittel aktivieren, sobald die Differenz zwischen dem tatsächlichen Bewegungsparameter und dem Soll-Bewegungsparameter der zweiten Komponente einen vorgegebenen Toleranzbereich verlässt. Bei dem Bewegungsparameter kann es sich im einfachsten Fall um einen Parameter handeln, der die momentane räumliche Lage der betreffenden Komponente (bezogen auf die Lage einer anderen Fahrzeugdachsystemkomponente oder Fahrzeugrumpfkomponente) charakterisiert, wie beispielsweise ein von einer Sensorik aufgenommener Verstellweg und/oder Verstelldrehwinkel. Es soll jedoch nicht ausgeschlossen sein, dass alternativ oder zusätzlich eine zeitliche Ableitung eines solchen Lageparameters, wie beispielsweise eine Lineargeschwindigkeit oder Drehgeschwindigkeit, für die Auswertung herangezogen wird.

Der für einen gewählten Bewegungsparameter vorgegebene Toleranzbereich kann durch eine oder mehrere überhalb eines Sollwerts liegende Toleranzschwellen und/oder eine oder mehrere unterhalb des Sollwerts liegende Toleranzschwellen begrenzt werden. Die Vorgabe mehrerer Toleranzschwellen in einer Abweichungsrichtung bietet z. B. den Vorteil, dass die gegebenenfalls erforderliche Korrektur der Synchronbewegung an das Ausmaß der erfassten Abweichung angepasst werden kann. In einer Weiterbildung kann vorgesehen sein, dass die Überwachungsmittel das Ausmaß einer etwaigen Abweichung im Wesentlichen stufenlos ermitteln und die Korrekturmittel dieses Ausmaß bei der Korrektur der Synchronbewegung berücksichtigen.

In einer Ausführungsform ist vorgesehen, dass die Breite des vorstehend erwähnten Toleranzbereiches über den Synchronbewegungsbereich der Verstellung variiert. Damit wird vorteilhaft dem Umstand Rechnung getragen, dass in der Regel nur bestimmte Bereiche innerhalb des Verstellvorganges im Hinblick auf die Betriebssicherheit als besonders kritisch zu betrachten sind, wohingegen andere Bewegungsphasen vergleichsweise unkritisch sind. In solchen Fällen kann der vorgegebene Toleranzbereich für kritischere Bewegungsphasen kleiner als für andere Abschnitte der Bewegung vorgesehen werden.

In einer Ausführungsform umfassen die Überwachungsmittel eine in elektronischer Form gespeicherte Nachschlagtabelle, welche einem tatsächlichen Bewegungsparameter der ersten Komponente einen Soll-Bewegungsparameter der zweiten Komponente zuordnet. Alternativ oder zusätzlich kann hierbei eine obere und/oder eine untere Toleranzschwelle für den Bewegungsparameter der zweiten Komponente zugeordnet werden.

Die Erfindung eignet sich insbesondere zur Betätigung von Fahrzeugdachsystemen, bei denen eine besonders rasche Verstellung zum Öffnen und/oder Schließen des Fahrzeugdaches gefordert wird und hierfür in mindestens einer Verstellungsphase wenigstens zwei Komponenten des Fahrzeugdachsystems gleichzeitig (gegeneinander und/oder gegenüber dem Fahrzeugrumpf) bewegt werden sollen. Es kann sich hierbei z. B. sowohl um klassische Stoffverdecksysteme mit mehreren Betätigungsbügelmechanismen als auch um so genannte "retractable hardtops" handeln. Im Sinne der Erfindung sind nicht nur die im geschlossenen Systemzustand das Dach ausbildenden Komponenten sondern prinzipiell sämtliche während der Verstellung bewegten Komponenten als Komponenten des Fahrzeugdachsystems zu betrachten. Darunter fällt somit z. B. auch ein so genannter Verdeckkastendeckel im Heckbereich des betreffenden Fahrzeugs.

In einer Ausführungsform ist wenigstens einer der hydraulischen Aktoren als Hydrozylinder ausgebildet, bei welchem ein Gehäuseinnenraum durch einen hin und her bewegbar angeordneten Kolben in zwei Arbeitskammern unterteilt ist, die jeweils einen Anschluss zum Zu- und Abführen von Hydraulikflüssigkeit aufweisen (doppeltwirkender Hydrozylinder). Bei einem solchen Hydrozylinder wird die Bewegung des Kolbens durch eine damit verbundene und abgedichtet nach außen geführte Kolbenstange auf die betreffende Komponente (z. B. Bewegungs- bzw. Verstellmechanik für ein Dachpaneel) übertragen. Alternativ kann ein hydraulischer Aktor auch z. B. von einem so genannten hydraulischen Schwenkmotor gebildet sein, mittels welchem unmittelbar eine Schwenkbewegung erzeugt werden kann.

Jeder hydraulische Aktor kann in an sich bekannter Weise mit der betreffenden Komponente des Fahrzeugdachsystems, z. B. einem Dachteil in Form eines Paneels oder einer Bewegungsmechanik hierfür (z. B. einem Viergelenk) verbunden sein.

Die bei der Erfindung während des Verstellvorganges wenigstens zeitweise erfolgende Synchronverstellung von zwei Aktoren schließt selbstverständlich nicht aus, dass das Fahrzeugdachsystem noch weitere Aktoren umfasst, sei es ebenfalls in zeitweiliger hydraulischer Kopplung mit einem anderen Aktor (und dann bevorzugt ebenfalls in der oben erläuterten Weise überwacht und gegebenenfalls korrigiert) oder unabhängig von den beiden oben beschriebenen Aktoren.

Außerdem kann einer oder können beide der in ihrer Synchronverstellung überwachten und gegebenenfalls korrigierten Aktoren in an sich bekannter Weise mehrfach vorgesehen und in hydraulischer Parallelschaltung betrieben werden, beispielsweise doppelt, z. B. links und rechts am Fahrzeug.

In einer Ausführungsform ist vorgesehen, dass wenigstens eine der beiden Komponenten des Fahrzeugdachsystems eine Bewegungsmechanik zur zwangsgekoppelten Bewegung wenigstens zweier Dachsystemteile darstellt, die demnach mit einem Aktor (oder einem parallel geschalteten Aktorpaar) bewegt werden.

In einer Ausführungsform ist vorgesehen, dass die erste Komponente durch den ersten Aktor relativ zu der zweiten Komponente bewegt wird, die wiederum durch einen anderen Aktor, insbesondere den zweiten Aktor, relativ zu einem Fahrzeugrumpf bzw. einer Fahrzeugkarosserie bewegt wird.

In einer bevorzugten Ausführungsform ist vorgesehen, dass die Betätigungsvorrichtung eine Pumpe mit einem Druckanschluss und einem mit einem Reservoir für Hydraulikflüssigkeit verbundenen Sauganschluss umfasst, wobei die Hydraulikpassage als Hydraulikleitungsanordnung ausgebildet ist, die für das wenigstens teilweise Aufheben der hydraulischen Kopplung über eine ansteuerbare Ventileinrichtung wahlweise mit dem Druckanschluss der Pumpe oder mit dem Reservoir verbindbar ist.

Die "hydraulische Kopplung" des ersten Aktors und des zweiten Aktors liegt vor, wenn die Betätigung des einen Aktors vermittels über die verbindende Hydraulikpassage strömende Hydraulikflüssigkeit die Betätigung des anderen Aktors bewirkt oder beeinflusst. Diese hydraulische Kopplung kann "vollständig" in dem Sinne sein, dass ein aus dem ersten Aktor herausströmendes Flüssigkeitsvolumen über die verbindende Hydraulikpassage identisch dem zweiten Aktor zugeführt wird (oder umgekehrt). Die hydraulische Kopplung kann teilweise aufgehoben werden, indem während der Synchronverstellungsphase Hydraulikflüssigkeit zu der Hydraulikpassage zugeführt oder von dieser abgeführt wird. In diesem Fall hängt die Bewegung des einen Aktors nicht nur von der Bewegung des anderen Aktors ab. Die hydraulische Kopplung ist "vollständig aufgehoben", wenn die Bewegung des einen Aktors durch die momentane Konfiguration des Hydrauliksystems keinen unmittelbaren Einfluss auf die Bewegung des anderen Aktors ausübt.

Eine zum Zuführen oder Abführen von Hydraulikflüssigkeit aus der Hydraulikpassage verwendete Ventileinrichtung kann zum Korrigieren der Synchronbewegung geeignet angesteuert werden. Die Ventileinrichtung kann hierfür z. B. ein oder mehrere geeignet angeordnete Wegeventile aufweisen, etwa um die oben erwähnte Verbindung der Hydraulikpassage zu einem Druckanschluss der Pumpe oder dem Reservoir zu bewerkstelligen, wobei diese Verbindung im einfachsten Fall ohne Zwischenschaltung einer so genannten Drossel erfolgt. In einer Weiterbildung kann vorgesehen sein, dass die Verbindung der Hydraulikpassage mit dem Druckanschluss der Pumpe bzw. dem Reservoir über eine Drosselanordnung, gegebenenfalls über eine entsprechend dem gewünschten Ausmaß der Korrektur einstellbare Drosselanordnung, hergestellt wird. Alternativ oder zusätzlich kann die Ventileinrichtung wenigstens ein so genanntes Proportionalventil umfassen, um vorteilhaft z. B. eine stufenlose Korrektur der vom Soll-Bewegungsablauf abweichenden Synchronbewegung zu ermöglichen.

In einer Ausführungsform der Erfindung ist die Pumpe des hydraulischen Systems in ihrer Pumprichtung umschaltbar. Eine solche Umschaltung kann sowohl für eine entgegengesetzte Beaufschlagung der hydraulischen Aktoren zum Öffnen und Schließen des Fahrzeugdachsystems als auch bei der erfindungsgemäß vorgesehenen Korrektur während der Synchronverstellungsphase genutzt werden.

In einer Weiterbildung der Erfindung ist für den Fall, dass eine Korrektur der Synchronbewegung aus irgendeinem Grund fehlschlägt, eine von der Betätigungsvorrichtung getroffene Entscheidung darüber vorgesehen, ob dann das Fahrzeugdachsystem in Öffnungsrichtung oder in Schließrichtung (oder überhaupt nicht) weiterbetrieben wird, wobei diese Entscheidung von der momentan eingenommenen Stellung der Fahrzeugdachsystemkomponenten abhängig ist.

Die Erfindung wird nachfolgend anhand eines Ausführungsbeispiels mit Bezug auf die beigefügten Zeichnungen näher erläutert. Es stellen dar:
- Fig. 1 bis 6: sind schematische Seitenansichten der Betätigungsmechanik eines Cabriolet-Verdecks in verschiedenen Betätigungsstellungen, wobei Fig. 1 die Schließstellung, die Fig. 2 bis 5 verschiedene Zwischen- stadien, und Fig. 6 die Öffnungsstellung des Verdecks darstellt,
- Fig. 7: ist eine Darstellung eines zur Betätigung des Verdecks der Fig. 1 bis 6 verwendeten Hydrauliksystems,
- Fig. 8: ist ein Flussdiagramm zur Veranschaulichung des Verdecköffnungs- vorganges bei dem Verdeck der Fig. 1 bis 6,
- Fig. 9: veranschaulicht die zeitlichen Verläufe von Aktorhüben zur Realisierung des Verdecköffnungsvorganges nach Fig. 8, und
- Fig. 10: ist ein Diagramm zur Veranschaulichung der Koordination der Aktorbetätigung während einer Synchronverstellungsphase in Fig. 9.

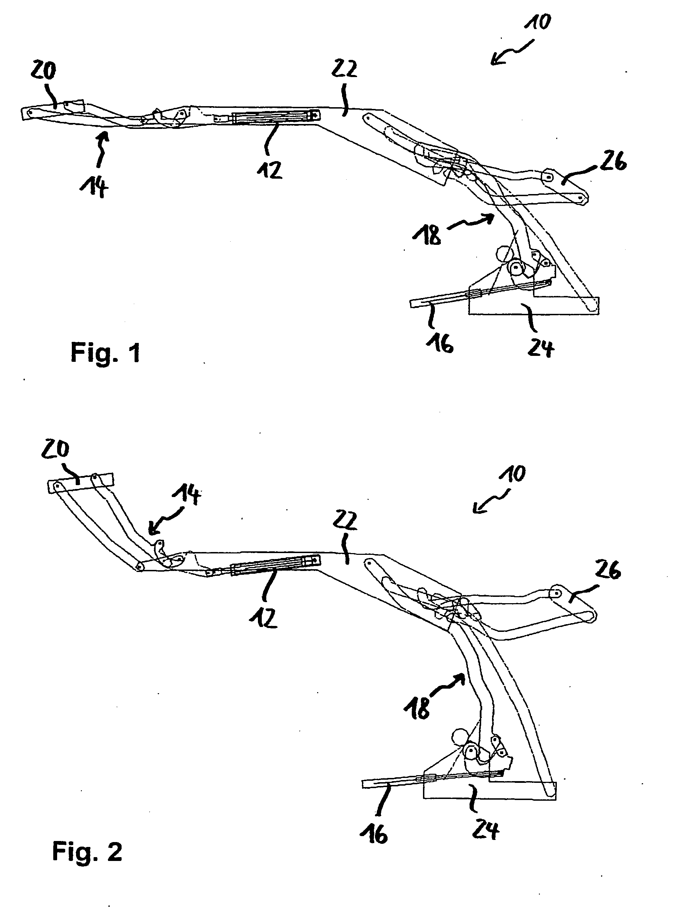

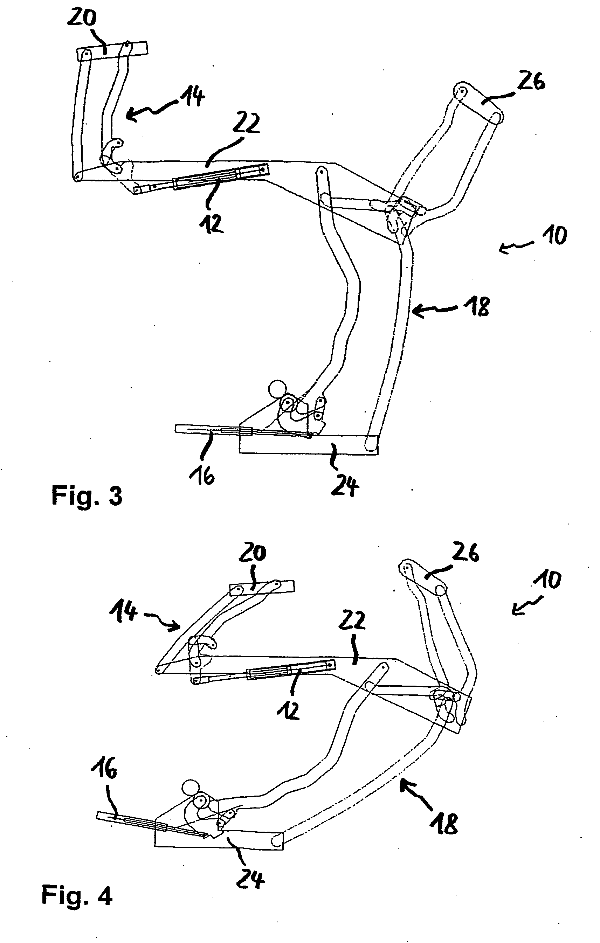

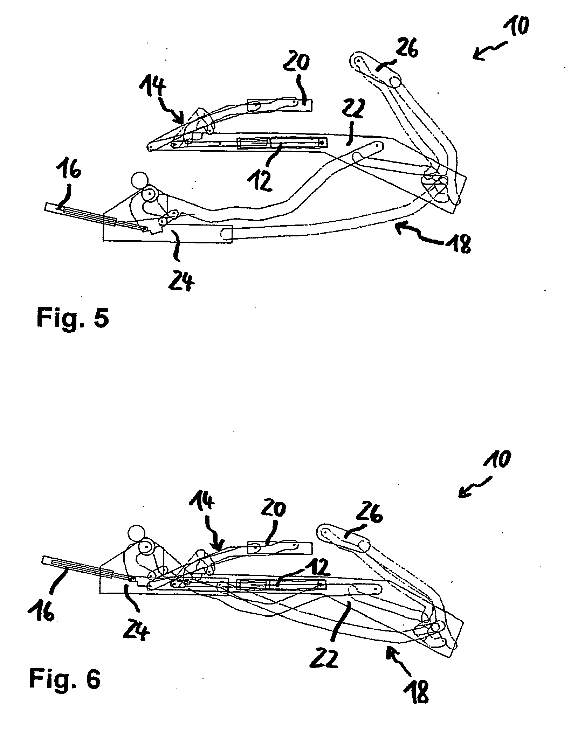

Die Fig. 1 bis 6 zeigen in dieser Reihenfolge verschiedene Stellungen eines Cabriolet-Verdecks 10 ausgehend von einer Schließstellung (Fig. 1) bis hin zu einer Öffnungsstellung (Fig. 6), wobei der Einfachheit der Darstellung halber lediglich zum Verständnis der Erfindung wesentliche Teile des Verdecks dargestellt sind. Außerdem sind die tatsächlich zweifach (links und rechts am Fahrzeug) vorgesehenen Teile in den Figuren nur einfach zu sehen.

Das Verdeck 10 umfasst einen ersten Hydrozylinder (erster hydraulischer Aktor) 12 zum Bewegen einer · ersten Bewegungsmechanik 14 und einen zweiten Hydrozylinder (zweiter hydraulischer Aktor) 16 zum Bewegen einer zweiten Bewegungsmechanik 18.

Die beiden Bewegungsmechaniken 14, 18 sind jeweils im Wesentlichen als eine Viergelenkanordnung ausgebildet. Die in Fahrzeuglängsrichtung vorne liegende Mechanik 14 lagert ein vorderes (nicht dargestelltes) Dachpaneel schwenkbeweglich relativ zu einem mittleren Dachpaneel (nicht dargestellt) des Verdecks 10. Das vordere Dachpaneel und das mittlere Dachpaneel sind hierbei an einem vorderen Paneelträger 20 bzw. einem mittleren Paneelträger 22 befestigt. Der vordere Paneelträger 20 bildet die Koppel der ersten Viergelenkanordnung 14, welche durch den ersten Aktor 12 verstellbar ist, der sich hierzu am mittleren Paneelträger 22 abstützt.

Die zweite Bewegungsmechanik 18 umfasst ebenfalls eine Viergelenkanordnung, welche eine Verschwenkung des mittleren Paneelträgers 22 gegenüber einer fahrzeugfesten stationären Basis 24 ermöglicht. Der an der zweiten Bewegungsmechanik 18 angreifende zweite Aktor 16 stützt sich hierfür fahrzeugfest ab.

Schließlich umfasst das Verdecksystem 10 einen hinteren Paneelträger 26, der mit einem (nicht dargestellten) hinteren Dachpaneel verbunden ist und die Koppel einer weiteren Viergelenkanordnung darstellt, die einen zwangsgekoppelten Teil der hinteren Mechanik 18 bildet.

Fig. 1 zeigt das Verdeck 10 in einer den Fahrzeuginnenraum überdeckenden Schließstellung. Die Kolbenstange des ersten Aktors 12 befindet sich im voll eingefahrenen Zustand, die des zweiten Aktors 16 im voll ausgefahrenen Zustand.

Zur Verstellung des Verdecks 10 ausgehend von der in Fig. 1 dargestellten Schließstellung zum Öffnen des Verdecks wird in einer ersten Phase lediglich der erste Aktor 12 betätigt (ausgefahren) und somit die erste Bewegungsmechanik 14 und das vordere Dachpaneel bewegt.

Etwa bei Erreichen des in Fig. 2 dargestellten Zustands wird zusätzlich der zweite Aktor 16 zur Verschwenkung der zweiten Bewegungsmechanik 18 betätigt (eingefahren). Damit beginnt eine auch als "Synchronverstellungsphase" bezeichnete zweite Phase, in welcher die beiden Aktoren 12 und 16 gleichzeitig betätigt werden (vgl. Fig. 2 bis 5).

Bei Erreichen des in Fig. 5 dargestellten Zustands wird die Synchronverstellungsphase beendet. Die Kolbenstange des ersten Aktors 12 befindet sich im voll ausgefahrenen Zustand. Sodann wird lediglich noch der zweite Aktor 16 betätigt, dessen Kolbenstange im Zustand gemäß Fig. 5 noch nicht voll eingefahren ist.

Damit wird schließlich der in Fig. 6 dargestellte Zustand erreicht, bei welchem das Verdecksystem 10 seine den Fahrzeuginnenraum freigebende Öffnungsstellung einnimmt. Die (nicht dargestellten) Dachpaneele sind dann übereinander in einem heckseitigen Verdeckkasten abgelegt. Der Verdeckschließvorgang erfolgt mit einem umgekehrten Bewegungsablauf.

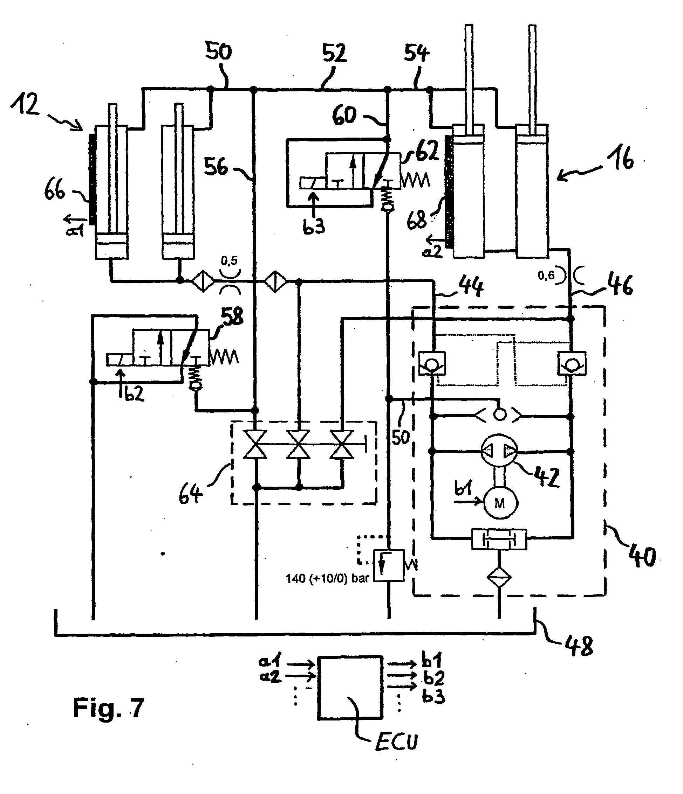

Fig. 7 ist ein Hydraulikschaltplan, aus welchem die Integration der jeweils zweifach (links und rechts am Fahrzeug) ausgeführten Aktoren 12 und 16 in einem hydraulischen System ersichtlich ist.

Das Hydrauliksystem umfasst eine Pumpenbaugruppe 40, die eine elektromotorisch betriebene (Ansteuersignal b1) und in ihrer Pumprichtung umschaltbare Hydraulikpumpe 42 aufweist. Wie es aus dem Schaltplan von Fig. 7 leicht ersichtlich ist, ermöglicht es die Pumpenbaugruppe 40, je nach gewählter Pumprichtung, eine von zwei Hydraulikleitungen 44, 46 mit Hydraulikdruck zu beaufschlagen und die jeweils andere der beiden Leitungen 44, 46 im Wesentlichen drucklos mit einem Reservoir 48 für Hydraulikflüssigkeit zu verbinden. Ferner umfasst die Pumpenbaugruppe 40 eine über ein Wechselventil angeschlossene Leitung 50, die im Betrieb der Pumpe 42 unabhängig von der Pumprichtung stets mit Hydraulikdruck beaufschlagt wird.

Die Leitung 44 ist über eine Filter- und Drosselanordnung mit einer ersten (kolbenflächenseitigen) Arbeitskammer des ersten Aktors 12 verbunden, wohingegen die Leitung 46 mit einer ersten (kolbenflächenseitigen) Arbeitskammer des zweiten Aktors 16 verbunden ist. Eine mit einer zweiten (kolbenstangenseitigen) Arbeitskammer des ersten Aktors 12 verbundene Leitung 50 ist über eine Leitung 52 mit einer Leitung 54 verbunden, die wiederum an einer zweiten (kolbenstangenseitigen) Arbeitskammer des zweiten Aktors 16 angeschlossen ist.

Die Leitungsanordnung 50, 52, 54 besitzt zwei Abzweigungen. An einer Stelle zweigt eine Leitung 56 ab, mittels welcher die Leitungsanordnung 50, 52, 54 wahlweise, nämlich mittels eines elektrisch ansteuerbaren Wegeventils 58 (Ansteuersignal b2), mit dem Reservoir 48 verbunden werden kann. An einer zweiten Stelle zweigt eine Leitung 60 ab, mittels welcher die Leitungsanordnung 50, 52, 54 wahlweise, nämlich mittels eines elektrisch ansteuerbaren Wegeventils 62 (Ansteuersignal b3), mit der Druckleitung 50 verbunden werden kann.

Ferner umfasst das Hydrauliksystem eine Anordnung 64 von drei normalerweise geschlossenen, manuell betätigbaren Absperrventilen ("Notbetätigungsventile"), welche es einem Servicepersonal gestattet, die Leitungen 56, 44 und 46 mit dem Reservoir 48 zu verbinden.

Das dargestellte Hydrauliksystem ermöglicht durch entsprechende Ansteuerung der Pumpe 42 und der Ventileinrichtung 58, 62 mittels der von einer elektronischen Steuereinrichtung ECU bereitgestellten Ansteuersignale b1, b2 und b3 jeden der Aktoren 12, 16 unabhängig vom anderen zu betreiben als auch in einer durch die Hydraulikpassage 50, 52, 54 bereitgestellten hydraulischen Kopplung synchron (gleichzeitig) zu betreiben.

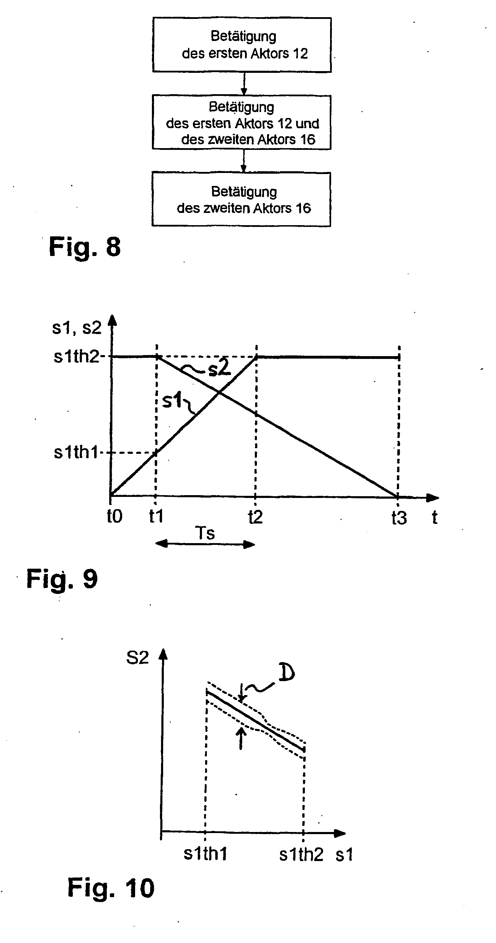

Nachfolgend wird der Betrieb des in Fig. 7 dargestellten Hydrauliksystems für den oben bereits mit Bezug auf die Fig. 1 bis 6 beschriebenen Öffnungsvorgang des Fahrzeugdachsystems 10 beschrieben, bei welchem in einer ersten Phase lediglich der erste Aktor 12, in einer zweiten Phase (Synchronverstellungsphase) sowohl der erste Aktor 12 als auch der zweite Aktor 16, und in einer dritten Phase lediglich der zweite Aktor 16 betrieben werden. Letzterer Bewegungsablauf ist in einem Flussdiagramm gemäß Fig. 8 nochmals verdeutlicht.

Die in Fig. 7 ersichtlichen Kolbenstellungen der beiden Aktoren 12 und 16 entsprechen der Schließstellung (vgl. Fig. 1) des Verdecks 10. Die Kolbenstange des ersten Aktors 12 ist voll eingefahren und die Kolbenstange des zweiten Aktors 16 ist voll ausgefahren.

Um nun das Verdeck 10 zu schließen, wird zunächst die Pumpe 42 in einer Pumprichtung eingeschaltet, bei welcher die Leitung 44 mit Hydraulikdruck beaufschlagt wird und die Leitung 46 drucklos mit dem Reservoir 48 verbunden wird. Gleichzeitig wird über die elektronische Steuereinrichtung ECU das Wegeventil 58 aus der in Fig. 7 dargestellten Ruheposition in seine Arbeitsposition umgeschaltet, so dass die Leitungsanordnung 50, 52, 54 über dieses Ventil 58 mit dem Reservoir 48 verbunden wird. Das Wegeventil 62 wird nicht angesteuert und befindet sich somit in seiner in Fig. 7 dargestellten Ruhestellung.

In dieser ersten Verstellphase wird somit lediglich der erste Aktor 12 betätigt (Kolbenstange fährt aus). Das von der kolbenstangenseitigen Arbeitskammer des ersten Aktors 12 ausgestoßene Flüssigkeitsvolumen strömt über die Leitungen 50, 56 und das Ventil 58 zum Reservoir 48. Demgegenüber wird der zweite Aktor 16 nicht betätigt, da seine beiden Arbeitskammern, die mit den Leitungen 46 und 54 verbunden sind, gleichermaßen drucklos gehalten sind.

Durch eine Sensorik, wie z. B. unmittelbar an den Aktoren 12 und 16 angeordnete Verstellwegsensoren 66 bzw. 68, werden der elektronischen Steuereinrichtung ECU Signale a1 und a2 eingegeben, welche charakteristisch für die Verstellwege der Aktoren 12, 16 und gleichbedeutend für die räumlichen Lagen der damit bewegten Komponenten 14, 18 des Verdecksystems 10 sind.

Wenn nun die Steuereinrichtung ECU anhand der genannten Sensorik das Erreichen einer vorgegebenen Zwischenstellung des ersten Aktors 12 erkennt, so wird eine Synchronverstellungsphase initiiert, in welcher der erste Aktor 12 und der zweite Aktor 16 zur Synchronbewegung der entsprechenden Verdecksystemkomponenten über die Hydraulikpassage 50, 52, 54 derart gekoppelt werden, dass das vom ersten Aktor 12 ausgestoßene Flüssigkeitsvolumen vollständig der kolbenstangenseitigen Arbeitskammer des zweiten Aktors 16 zugeführt wird und das von der kolbenflächenseitigen Arbeitskammer des zweiten Aktors 16 dementsprechend ausgestoßene Flüssigkeitsvolumen zum Reservoir 48 zurückgeführt wird. Zu diesem Zweck bewirkt die Steuereinrichtung ECU eine Umstellung des Wegeventils 58 in seine Ruhestellung. Die Hydraulikpassage 50, 52, 54 ist dann nicht mehr mit dem Reservoir 48 verbunden und bewirkt die erwähnte hydraulische Kopplung der beiden Aktoren zur gleichzeitigen Betätigung.

Die Synchronverstellungsphase wird beendet, sobald die Steuereinrichtung ECU anhand der Sensorik feststellt, dass der erste Aktor 12 eine zweite vorgegebene Stellung erreicht hat. Beim beschriebenen Ausführungsbeispiel entspricht diese zweite vorgegebene Stellung der Endstellung des Aktors 12, bei welcher dessen Kolbenstange voll ausgefahren ist. Wenn dies der Fall ist, stellt die Steuereinrichtung das Wegeventil 62 in seine Arbeitsstellung um, so dass unter Druck stehende Hydraulikflüssigkeit über die Leitung 50, das Ventil 62 und die Leitungen 60, 54 in die kolbenstangenseitige Arbeitskammer des zweiten Aktors 16 strömt. Das entsprechende, von der kolbenflächenseitigen Arbeitskammer des zweiten Aktors 16 ausgestoßene Flüssigkeitsvolumen strömt über die Leitung 46 zum Reservoir 48. Demgegenüber erfolgt keine Verstellung des ersten Aktors 12, weil beide damit verbundenen Leitungen 44, 50 gleichermaßen unter Hydraulikdruck stehen.

Diese dritte Phase, in welcher lediglich noch der zweite Aktor 16 betrieben wird, wird durch die Steuereinrichtung ECU beendet, sobald anhand der Sensorik festgestellt wird, dass die Kolbenstange des zweiten Aktors 16 eine vorgegebene Stellung (hier: voll eingefahrene Stellung) erreicht hat. Am Ende dieser dritten Phase ist das Verdeck geöffnet (vgl. Fig. 6).

Fig. 9 veranschaulicht nochmals den zeitlichen Verlauf von Aktorhüben s1 (des ersten Aktors 12) und s2 (des zweiten Aktors 16) beim Verdecköffnungsvorgang.

Zu einem Zeitpunkt t0 ist der erste Aktor 12 im voll eingefahrenen Zustand und der zweite Aktor 16 im voll ausgefahrenen Zustand.

Sodann wird lediglich der erste Aktor 16 ausgefahren, bis dessen Hub s1 eine vorgegebene Zwischenstellung s1th1 zu einem Zeitpunkt t1 erreicht. Sodann beginnt die Synchronverstellungsphase in einem Zeitraum Ts, der von dem Zeitpunkt t1 bis zu einem Zeitpunkt t2 reicht. In dieser zweiten Phase Ts wird der erste Aktor 12 weiter ausgefahren und gleichzeitig der zweite Aktor 16 (durch die hydraulische Kopplung) eingefahren. Das Verhältnis der Hubgeschwindigkeiten ds1/dt und ds2/dt ist während der Phase Ts konstant und lediglich durch die Konstruktion und Konfiguration (Orientierung) der beiden Aktoren 12, 16 vorgegeben. Lediglich beispielhaft ist in Fig. 9 eine Hubgeschwindigkeit des zweiten Aktors 16 dargestellt, die betragsmäßig kleiner als die Hubgeschwindigkeit des ersten Aktors 12 ist. In der Praxis kann das Verhältnis dieser Hubgeschwindigkeiten in einfacher Weise durch entsprechende Dimensionierung der Aktoren an den Einzelfall angepasst werden.

Das Ende der Synchronverstellungsphase Ts (Zeitpunkt t2) ist erreicht, wenn der Hub s1 des ersten Aktors 12 eine weitere vorgegebene Stellung s1th2 erreicht. Dann wird lediglich noch der zweite Aktor 16 weiter eingefahren, bis dieser schließlich zu einem Zeitpunkt t3 seinen voll eingefahrenen Zustand erreicht.

Die Steuereinrichtung ECU überwacht anhand von der Sensorik eingegebenen Signalen a1 und a2 während der Synchronverstellungsphase Ts ständig die Synchronbewegung der durch die beiden Aktoren 12, 16 angetriebenen Komponenten 14, 18 und erfasst gegebenenfalls eine Abweichung der Synchronbewegung von einer in der Steuereinrichtung ECU vorgegebenen Soll-Synchronbewegung.

Fig. 10 veranschaulicht die für das Beispiel von Fig. 9 vorgegebene Soll-Synchronbewegung bzw. die gewünschte (ideale) Koordination der Aktorhübe s1 und s2 während der Synchronverstellungsphase Ts. In dieser Figur ist ein gewünschter Soll-Hub S2 des zweiten Aktors 16 in Abhängigkeit von einem tatsächlichen (durch die Sensorik gemessenen) Hub s1 des ersten Aktors 12 aufgetragen. Diese Abhängigkeit zwischen s2 und s1 ist in Form eines von s1 abhängigen "Wertefensters" in einer Nachschlagtabelle der programmgesteuert betriebenen Steuereinrichtung ECU gespeichert. Das Wertefenster stellt hierbei einen Toleranzbereich dar, der durch eine untere und eine obere Toleranzschwelle begrenzt wird (in Fig. 10 gestrichelt eingezeichnet).

Während der Synchronverstellung vergleicht die Steuereinrichtung ECU periodisch ( z. B. in Zeitabständen von weniger als einer Sekunde) den durch die Sensorik 66, 68 erfassten Hub s2 des zweiten Aktors 16 mit dem auf Basis des erfassten Hubs s1 von der Nachschlagtabelle zugeordneten Soll-Hub S2. Falls dieser Vergleich ergibt, dass der tatsächliche Hub s2 innerhalb des für den aktuellen Wert von s1 vorgegebenen Toleranzbereiches liegt, wird die Synchronverstellung unverändert fortgesetzt. Falls jedoch festgestellt wird, dass der tatsächliche Hub s2 den Toleranzbereich (nach oben oder unten) verlässt, so veranlasst ein in der Steuereinrichtung ECU ablaufendes Steuerprogramm eine Korrektur der Synchronbewegung durch wenigstens teilweises Aufheben der hydraulischen Kopplung der beiden Aktoren 12 und 16, derart, dass diese Korrektur in Richtung der gewünschten Koordination der Aktorhübe s1 und s2 wirkt. Damit können durch Bauteiltoleranzen und/oder Betriebsfehler wie z. B. Hydraulikleckagen verursachte Abweichungen der gewünschten Verstellcharakteristik von einer Vorgabe in einfacher Weise kompensiert werden. Vorteilhaft können solche Korrekturen mit dem in Fig. 7 dargestellten Hydrauliksystem bewerkstelligt werden, ohne dass hierfür zusätzliche Hydraulikkomponenten notwendig sind.

Wenn beispielsweise während der Synchronverstellungsphase Ts festgestellt wird, dass der zweite Aktor 16 in nicht mehr akzeptabler Weise "nachhinkt", so kann dies z. B. durch ein kurzzeitiges Umstellen des Ventils 62 in seine Arbeitsposition korrigiert werden. Damit wird nämlich der Betrieb des ersten Aktors 12 gebremst bzw. kurzzeitig ausgesetzt und der zweite Aktor 16 weiterbetrieben. Sollte der zweite Aktor 16 zum nächsten Überprüfungszeitpunkt immer noch übermäßig nachhinken, so kann die vorstehend erläuterte Korrekturprozedur wiederholt werden.

Falls der zweite Aktor 16 während der Synchronverstellungsphase Ts "vorauseilt", so kann dies in ähnlicher Weise z. B. durch ein kurzzeitiges Umstellen des Ventil 58 in seine Arbeitsstellung korrigiert werden. Damit wird die Verstellbewegung des ersten Aktors 12 im Wesentlichen nicht beeinflusst (oder sogar geringfügig beschleunigt) und die Verstellbewegung des zweiten Aktors 16 abgebremst bzw. kurzzeitig ausgesetzt.

In jedem Fall erfolgt die Korrektur durch eine wenigstens teilweise Aufhebung der hydraulischen Kopplung der beiden Aktoren über die Hydraulikpassage 50, 52, 54, die im normalen Synchronbetrieb eine abgeschlossen zwischen den beiden Aktoren 12, 16 verlaufende Hydraulikleitung darstellt und bei welcher zur Korrektur Hydraulikflüssigkeit zugeführt oder abgeführt wird (je nach gewünschter Korrekturrichtung).

Wie es aus Fig. 10 ersichtlich ist, variiert eine Breite D des Toleranzbereiches in Abhängigkeit von dem erfassten Hub s1. Diese Maßnahme führt zu einer besonders bedarfsgerechten Korrekturfunktionalität. Damit wird vorteilhaft dem Umstand Rechnung getragen, dass es für die meisten öffnungsfähigen Fahrzeugdachsysteme eine oder mehrere Phasen gibt, in denen die Gefahr einer Kollision von Bauteilen besonders groß ist.

In einer vorteilhaften Weiterbildung der beschriebenen Ausführungsform ist vorgesehen, dass die Dauer der für eine Korrektur vorgesehenen Umstellung des Ventils 62 oder des Ventils 58 von der Steuereinrichtung ECU in Abhängigkeit von dem Ausmaß der Abweichung zwischen dem tatsächlichen Wert s2 und dem SollWert S2 des Aktorhubs gewählt wird.

In einer anderen Ausführungsform ist vorgesehen, dass eine stufenlose Korrektur mittels Proportionalventilen erfolgt, die z. B. parallel zu den in Fig. 7 eingezeichneten Ventile 58 und 62 geschaltet sind oder diese Ventile 58, 62 ersetzen. Mit einem solchen Proportionalhydrauliksystem lässt sich dann sogar eine im Wesentlichen kontinuierliche Regelung der Synchronbewegung auf die gewünschte Sollbewegung realisieren.

Mit dem auf Wegeventil basierenden, in Fig. 7 dargestellten Hydrauliksystem kann auch ein Korrekturverfahren während der Synchronverstellungsphase realisiert werden, bei welchem eine zur Korrektur des Nachhinkens oder Vorauseilens des zweiten Aktors 16 bewirkte Umstellung des Ventils 58 oder 62 solange aufrecht erhalten wird, bis der tatsächliche Aktorhub s2 wieder akzeptabel ist (d. h. im Toleranzbereich liegt).

Mit der dargestellten Wegeventileinrichtung 58, 62 lässt sich durch eine während der Korrektur getaktete Ansteuerung mit variabler Pulslänge und/oder variablem Pulsabstand eine "Proportionalcharakteristik" annähern. Beispielsweise kann die Steuereinrichtung ECU Pulse mit einem Tastverhältnis erzeugen, welches abhängig von dem Ausmaß der gewünschten Korrektur ist.

Die oben beschriebene Betätigung eines Fahrzeugdachsystems ermöglicht auch im Falle von vergleichsweise großen Bauteiltoleranzen und/oder Betriebsstörungen eine rasche Verstellung des Fahrzeugdachsystems unter zuverlässiger Vermeidung von Kollisionen.

### Bezugszeichenliste

- 10: Verdecksystem
- 12: erster Aktor
- 14: erste Bewegungsmechanik
- 16: zweiter Aktor
- 18: zweite Bewegungsmechanik
- 20: vorderer Paneelträger
- 22: mittlerer Paneelträger
- 24: Basis
- 26: hinterer Paneelträger
- 40: Pumpenbaugruppe
- 42: Pumpe
- 44: Leitung
- 46: Leitung
- 48: Reservoir
- 50: Leitung
- 52: Leitung
- 54: Leitung
- 56: Leitung
- 58: Wegeventil
- 60: Leitung
- 62: Wegeventil
- 64: Absperrventilanordnung
- 66: Verstellwegsensor
- 68: Verstellwegsensor
- t: Zeit
- Ts: Synchronverstellungsphase
- s1: Hub des ersten Aktors
- s2: Hub des zweiten Aktors

## Patentansprüche

1. Vorrichtung zur Betätigung eines Fahrzeugdachsystems (10), umfassend einen ersten hydraulischen Aktor (12) zum Bewegen einer ersten Komponente (14) des Fahrzeugdachsystems und einen zweiten hydraulischen Aktor (16) zum Bewegen einer zweiten Komponente (18) des Fahrzeugdachsystems, um das Fahrzeugdachsystem (10) zwischen einer den Fahrzeuginnenraum überdeckenden Schließstellung (Fig. 1) und einer den Fahrzeuginnenraum freigebenden Öffnungsstellung (Fig. 6) zu verstellen, wobei die Vorrichtung dazu ausgebildet ist, während der Verstellung zum Öffnen und/oder Schließen des Fahrzeugdachsystems (10) eine Synchronverstellungsphase (Ts) vorzusehen, in welcher der erste Aktor (12) und der zweite Aktor (16) zur Synchronbewegung der beiden Komponenten (14, 18) über eine die beiden Aktoren (12, 16) verbindende Hydraulikpassage (50, 52, 54) hydraulisch gekoppelt sind,
**dadurch gekennzeichnet, dass** die Vorrichtung umfasst:
- Überwachungsmittel (66, 68, ECU) zum Überwachen der Synchronbewegung (s1, s2) der beiden Komponenten (14, 18) während der Synchronverstellungsphase (Ts) und zum Erfassen einer Abweichung der Synchronbewegung (s1, s2) von einer vorgegebenen Soll-Synchronbewegung (s1, S2(s1)), und
- Korrekturmittel (ECU, 58, 62) zum Korrigieren der Synchronbewegung (s1, s2) durch wenigstens teilweises Aufheben der hydraulischen Kopplung der beiden Aktoren (12, 16) im Falle der Erfassung einer Abweichung der Synchronbewegung (s1, s2) von der vorgegebenen Soll-Synchronbewegung (s1, S2(s1)).

2. Vorrichtung nach Anspruch 1, wobei die Überwachungsmittel (66, 68, ECU) eine elektronische Steuereinrichtung (ECU) umfassen, welcher Sensorsignale (a1, a2) einer an beiden Aktoren (12, 16) und/oder beiden Komponenten (14, 18) des Fahrzeugdachsystems (10) angeordneten Weg- und/oder Drehwinkelsensorik (66, 68) zur Auswertung eingegeben werden.

3. Vorrichtung nach einem der vorangehenden Ansprüche, wobei die Überwachungsmittel (66, 68, ECU) einen tatsächlichen Bewegungsparameter (s2) der zweiten Komponente (18) mit einem auf Basis eines tatsächlichen Bewegungsparameters (s1) der ersten Komponente (14) erzeugten Soll-Bewegungsparameter (S2) der zweiten Komponente (18) vergleichen und die Korrekturmittel (ECU, 58, 62) aktivieren, sobald die Differenz zwischen dem tatsächlichen Bewegungsparameter (s2) und dem Soll-Bewegungsparameter (S2) der zweiten Komponente (18) einen vorgegebenen Toleranzbereich verlässt.

4. Vorrichtung nach Anspruch 3, wobei eine Breite (D) des Toleranzbereiches über den Synchronbewegungsbereich (s1th1, s1th2) der Verstellung variiert.

5. Vorrichtung nach einem der vorangehenden Ansprüche, wobei die Überwachungsmittel (66, 68, ECU) eine in elektronischer Form gespeicherte Nachschlagtabelle umfassen, welche einem tatsächlichen Bewegungsparameter (s1) der ersten Komponente (14) einen Soll-Bewegungsparameter (S2) der zweiten Komponente (18) zuordnet.

6. Vorrichtung nach einem der vorangehenden Ansprüche, umfassend eine Pumpe (42) mit einem Druckanschluss (44, 46, 50) und einem mit einem Reservoir (48) für Hydraulikflüssigkeit verbundenen Sauganschluss, wobei die Hydraulikpassage (50, 52, 54) als Hydraulikleitungsanordnung ausgebildet ist, die für das wenigstens teilweise Aufheben der hydraulischen Kopplung über eine ansteuerbare Ventileinrichtung (58, 62) wahlweise mit dem Druckanschluss (44, 46, 50) der Pumpe oder mit dem Reservoir (48) verbindbar ist.

7. Vorrichtung nach Anspruch 6, wobei die Ventileinrichtung (58, 62) wenigstens ein Proportionalventil umfasst.

8. Verfahren zur Betätigung eines Fahrzeugdachsystems (10), umfassend ein hydraulisch angetriebenes Bewegen einer ersten Komponente (14) des Fahrzeugdachsystems und ein hydraulisch angetriebenes Bewegen einer zweiten Komponente (18) des Fahrzeugdachsystems, um das Fahrzeugdachsystem (10) zwischen einer den Fahrzeuginnenraum überdeckenden Schließstellung (Fig. 1) und einer den Fahrzeuginnenraum freigebenden Öffnungsstellung (Fig. 6) zu verstellen, wobei während der Verstellung zum Öffnen und/oder Schließen des Fahrzeugdachsystems (10) eine Synchronverstellungsphase (Ts) vorgesehen wird, in welcher die beiden hydraulisch angetriebenen Bewegungen durch eine hydraulische Kopplung von hierfür verwendeten hydraulischen Aktoren (12, 16) mittels einer die beiden Aktoren verbindenden Hydraulikpassage synchronisiert werden,
**dadurch gekennzeichnet, dass** das Verfahren die Schritte umfasst:
- Überwachen der Synchronbewegung (s1, s2) während der Synchronverstellungsphase (Ts) und gegebenenfalls Erfassen einer Abweichung der Synchronbewegung (s1, s2) von einer vorgegebenen Soll-Synchronbewegung (s1, S2(s1)), und
- Korrigieren der Synchronbewegung (s1, s2) durch wenigstens teilweises Aufheben der hydraulischen Kopplung im Falle der Erfassung einer Abweichung der Synchronbewegung (s1, s2) von der vorgegebenen Soll-Synchronbewegung (s1, S2(s1)).

## Claims

1. Device for actuating a vehicle roof system (10), comprising a first hydraulic actuator (12) for moving a first component (14) of the vehicle roof system, and a second hydraulic actuator (16) for moving a second component (18) of the vehicle roof system in order to displace the vehicle roof system (10) between a closed position (Fig. 1) covering the vehicle interior and an open position (Fig. 6) opening up the vehicle interior, wherein the device is designed so as, during the displacement for opening and/or closing the vehicle roof system (10), to provide a synchronous displacement phase (Ts) in which, for the synchronous movement of the two components (14, 18), the first actuator (12) and the second actuator (16) are hydraulically coupled via a hydraulic passage (50, 52, 54) connecting the two actuators (12, 16),
**characterized in that** the device comprises:
- monitoring means (66, 68, ECU) for monitoring the synchronous movement (s1, s2) of the two components (14, 18) during the synchronous displacement phase (Ts) and for detecting a deviation of the synchronous movement (s1, s2) from a predetermined desired synchronous movement (s1, S2 (s1)), and
- correcting means (ECU, 58, 62) for correcting the synchronous movement (s1, s2) by at least partially suspending the hydraulic coupling of the two actuators (12, 16) in the event of a deviation of the synchronous movement (s1, s2) from the predetermined desired synchronous movement (s1, S2 (s1)) being detected.

2. Device according to Claim 1, wherein the monitoring means (66, 68, ECU) comprise an electronic control device (ECU) to which sensor signals (a1, a2) of a travel and/or angle of rotation sensor system (66, 68), which is arranged on the two actuators (12, 16) and/or the two components (14, 18) of the vehicle roof system (10), are input for evaluation.

3. Device according to one of the preceding claims, wherein the monitoring means (66, 68, ECU) compare an actual movement parameter (s2) of the second component (18) with a desired movement parameter (S2) of the second component (18), which desired movement parameter is generated on the basis of an actual movement parameter (s1) of the first component (14), and activate the correcting means (ECU, 58, 62) as soon as the difference between the actual movement parameter (s2) and the desired movement parameter (S2) of the second component (18) leaves a predetermined tolerance range.

4. Device according to Claim 3, wherein a width (D) of the tolerance range varies over the synchronous movement range (s1th1, s1th2) of the displacement.

5. Device according to one of the preceding claims, wherein the monitoring means (66, 68, ECU) comprise a look-up table which is stored in electronic form and assigns a desired movement parameter (S2) of the second component (18) to an actual movement parameter (s1) of the first component (14).

6. Device according to one of the preceding claims, comprising a pump (42) with a delivery connection (44, 46, 50) and a suction connection connected to a reservoir (48) for hydraulic fluid, wherein the hydraulic passage (50, 52, 54) is designed as a hydraulic line arrangement which can be connected either to the delivery connection (44, 46, 50) of the pump or to the reservoir (48) via an activatable valve device (58, 62) for the at least partial suspension of the hydraulic coupling.

7. Device according to Claim 6, wherein the valve device (58, 62) comprises at least one proportional valve.

8. Method for actuating a vehicle roof system (10), comprising a hydraulically driven movement of a first component (14) of the vehicle roof system and a hydraulically driven movement of a second component (18) of the vehicle roof system in order to displace the vehicle roof system (10) between a closed position (Fig. 1) covering the vehicle interior and an open position (Fig. 6) opening up the vehicle interior, wherein, during the displacement for opening and/or closing the vehicle roof system (10), a synchronous displacement phase (Ts) is provided in which the two hydraulically driven movements are synchronized by a hydraulic coupling of hydraulic actuators (12, 16), which are used for this, by means of a hydraulic passage connecting the two actuators,
**characterized in that** the method comprises the following steps:
- monitoring the synchronous movement (s1, s2) during the synchronous displacement phase (Ts) and, if appropriate, detecting a deviation of the synchronous movement (s1, s2) from a predetermined desired synchronous movement (s1, S2(s1)), and
- correcting the synchronous movement (s1, s2) by at least partially suspending the hydraulic coupling in the event of a deviation of the synchronous movement (s1, s2) from the predetermined desired synchronous movement (s1, S2(s1)) being detected.

## Revendications

1. Dispositif pour actionner un système de toit de véhicule (10), comprenant un premier actionneur hydraulique (12) pour déplacer un premier composant (14) du système de toit du véhicule et un deuxième actionneur hydraulique (16) pour déplacer un deuxième composant (18) du système de toit du véhicule, afin de déplacer le système de toit du véhicule (10) entre une position de fermeture (figure 1) recouvrant l'habitacle du véhicule et une position d'ouverture (figure 6) exposant l'habitacle du véhicule, le dispositif étant réalisé pour prévoir, pendant le déplacement d'ouverture et/ou de fermeture du système de toit du véhicule (10), une phase de réglage synchronisée (Ts) dans laquelle le premier actionneur (12) et le deuxième actionneur (16) sont accouplés hydrauliquement pour le déplacement synchronisé des deux composants (14, 18) par le biais d'un passage hydraulique (50, 52, 54) reliant les deux actionneurs (12, 16),
**caractérisé en ce que** le dispositif comprend :
- des moyens de surveillance (66, 68, ECU) pour surveiller le déplacement synchronisé (s1, s2) des deux composants (14, 18) pendant la phase de réglage synchronisée (Ts) et pour détecter un écart du déplacement synchronisé (s1, s2) par rapport à un déplacement synchronisé de consigne prédéfini (s1, S2(s1)), et
- des moyens de correction (ECU, 58, 62) pour corriger le déplacement synchronisé (s1, s2) par une suppression au moins partielle de l'accouplement hydraulique des deux actionneurs (12, 16) dans le cas d'une détection d'un écart du déplacement synchronisé (s1, s2) par rapport au déplacement synchronisé de consigne prédéfini (s1, S2(s1)).

2. Dispositif selon la revendication 1, dans lequel les moyens de surveillance (66, 68, ECU) comprennent un dispositif de commande électronique (ECU) dans lequel sont entrés des signaux de capteur (a1, a2) d'un système de capteurs de distance et/ou d'angle de rotation (66, 68) disposés sur les deux actionneurs (12, 16) et/ou les deux composants (14, 18) du système de toit du véhicule (10) en vue d'une analyse.

3. Dispositif selon l'une quelconque des revendications précédentes, dans lequel les moyens de surveillance (66, 68, ECU) comparent un paramètre de déplacement proprement dit (s2) du deuxième composant (18) avec un paramètre de déplacement de consigne (S2) du deuxième composant (18) produit sur la base d'un paramètre de déplacement proprement dit (s1) du premier composant (14) et activent les moyens de correction (ECU, 58, 62) dès que la différence entre le paramètre de déplacement proprement dit (s2) et le paramètre de déplacement de consigne (S2) du deuxième composant (18) sort d'une plage de tolérances prédéfinie.

4. Dispositif selon la revendication 3, dans lequel une largeur (D) de la plage de tolérances varie sur la plage de déplacement synchronisé (s1th1, s1th2) du réglage.

5. Dispositif selon l'une quelconque des revendications précédentes, dans lequel les moyens de surveillance (66, 68, ECU) comprennent un tableau de référence stocké sous forme électronique, qui associe à un paramètre de déplacement proprement dit (s1) du premier composant (14) un paramètre de déplacement de consigne (S2) du deuxième composant (18).

6. Dispositif selon l'une quelconque des revendications précédentes, comprenant une pompe (42) avec un raccord de pression (44, 46, 50) et un raccord d'aspiration connecté à un réservoir (48) de liquide hydraulique, le passage hydraulique (50, 52, 54) étant réalisé sous forme d'agencement de conduite hydraulique qui peut être connecté, pour la suppression au moins partielle de l'accouplement hydraulique, par le biais d'un dispositif de soupape commandable (58, 62), de manière sélective au raccord de pression (44, 46, 50) de la pompe ou au réservoir (48).

7. Dispositif selon la revendication 6, dans lequel le dispositif de soupape (58, 62) comprend au moins une soupape proportionnelle.

8. Procédé pour actionner un système de toit de véhicule (10), comprenant un déplacement entraîné hydrauliquement d'un premier composant (14) du système de toit du véhicule et un déplacement entraîné hydrauliquement d'un deuxième composant (18) du système de toit du véhicule, afin de déplacer le système de toit du véhicule (10) entre une position de fermeture (figure 1) recouvrant l'habitacle du véhicule et une position d'ouverture (figure 6) exposant l'habitacle du véhicule, une phase de réglage synchronisée (Ts) étant prévue pendant le déplacement d'ouverture et/ou de fermeture du système de toit du véhicule (10), dans laquelle les deux déplacements entraînés hydrauliquement sont synchronisés par un accouplement hydraulique d'actionneurs hydrauliques utilisés à cet effet (12, 16) au moyen d'un passage hydraulique reliant les deux actionneurs, **caractérisé en ce que** le procédé comprend les étapes suivantes :
- surveillance du déplacement synchronisé (s1, s2) pendant la phase de réglage synchronisée (Ts) et éventuellement détection d'un écart du déplacement synchronisé (s1, s2) par rapport à un déplacement synchronisé de consigne prédéfini (s1, S2(s1)), et
- correction du déplacement synchronisé (s1, s2) par une suppression au moins partielle de l'accouplement hydraulique dans le cas d'une détection d'un écart du déplacement synchronisé (s1, s2) par rapport au déplacement synchronisé de consigne prédéfini (s1, S2(s1)).
